# FASCICULE DE BREVET EUROPEEN

(11) **EP 1 602 091 B1**
(45) Date de publication et mention de la délivrance du brevet: **29.04.2009**
(21) Numéro de dépôt: 04716621.0
(22) Date de dépôt: 03.03.2004
(51) Int. Cl.: G08B 17/06

(54) **CAPTEUR DE DETECTION DE SURCHAUFFE**
SENSOR ZUR DETEKTIERUNG VON ÜBERTEMPERATUR
OVERHEAT DETECTION SENSOR

(30) Priorité: 03.03.2003 FR 0302583
(43) Date de publication de la demande: 07.12.2005
(73) Titulaire: Auxitrol S.A., 18000 Bourges (FR); SIEMENS SAS, 93200 Saint-Denis (FR)
(72) Inventeur: CHAUMEAU, Hervé, F-18000 Bourges (FR); LHUILLIER, Bruno, F-36100 Les Bordes (FR)
(74) Mandataire: Callon de Lamarck, Jean-Robert
(86) Numéro de dépôt international: PCT/FR2004/000494
(87) Numéro de publication internationale: WO 2004/081504

(56) Documents cités:
- GB-A- 2 276 944
- US-A- 2 764 659
- US-A- 5 161 894

## Description

La présente invention est relative à un capteur de détection de surchauffe. '

Un tel capteur est notamment destiné à être utilité pour détecter des éventuels risques d'incendie dans la zone dans laquelle il est implanté.

Il trouve en particulier avantageusement application pour la détection de surchauffe dans les zones moteur (avion, bateau, hélicoptère, sous-marin, navette spatiale, installations industrielles) et plus généralement dans toute zone sensible (soutes, cases à train, etc...).

On connaît classiquement des détecteurs de surchauffe de type pneumatique.

Un tel détecteur utilise un gaz qui - lorsqu'il se dilate sous l'effet d'une surchauffe - vient basculer un contact électrique, ce qui permet de mettre en évidence un franchissement de seuil par la température moyenne dudit détecteur. On pourra à cet égard avantageusement se référer au brevet US 5 136 278.

Il est également généralement prévu des moyens, par exemple de type à oxyde métallique, qui sont répartis sur toute la longueur du détecteur et qui permettent quant à eux de mettre en évidence localement des franchissements de seuil de température .

Les capteurs pneumatiques ont l'inconvénient de nécessiter l'assemblage de pièces mobiles et d'être par conséquent d'une réalisation compliquée et onéreuse.

On connaît également des détecteurs à résistance à coefficient thermique négatif (câble NTC ou *"Negative Thermal Coefficient"* selon la terminologie anglo-saxonne généralement utilisée).

Le document GB 2 276 944 décrit un capteur de détection d'une surchauffe locale et d'une surveillance de la température ambiante. Pour ce faire, le capteur a une âme conductrice et une gaine séparées par un matériau à coefficient de température positif ou négatif, ainsi qu'un fil s'étendant longitudinalement dans l'âme, le fil étant en un matériau à coefficient de température positif ou négatif.

De tels capteurs permettent essentiellement des détections de surchauffe locale.

Ils sont mono-critères et peu robustes aux situations de défaillance.

L'invention propose quant à elle un système de détection qui permet de pallier les inconvénients des détecteurs précités

Elle propose quant à elle un capteur qui permet d'acquérir en temps réel plusieurs informations de surchauffe.

Le capteur permet notamment de quantifier en temps réel une surchauffe générale et une surchauffe locale et ce en utilisant uniquement les propriétés électriques des matériaux constituant le capteur.

La structure de ce capteur a en outre l'avantage d'être d'une grande fiabilité.

Plus précisément, le capteur proposé par l'invention est un capteur de détection de surchauffe caractérisé en ce qu'il comporte une âne conductrice s'étendant à l'intérieur d'une première gaine également conductrice, ladite âme et ladite première gaine étant séparées par un matériau à coefficient de température positif ou négatif, ledit détecteur comportant en outre un fil en un matériau à coefficient de température positif ou négatif qui s'étend sur la première gaine et est séparé de celle-ci par un matériau isolant, l'âme centrale, la première gaine et le fil étant raccordés à des moyens de connexion.

Dans un mode de réalisation avantageux, le fil qui s'étend sur la première gaine est un fil qui est bobiné sur celle-ci.

Egalement, le matériau qui sépare l'âme et la première gaine est un matériau à coefficient de température négatif, le fil bobiné étant en un matériau à coefficient de température positif.

D'autres caractéristiques et avantages de l'invention ressortiront encore de la description qui suit, laquelle est illustrative et non limitative et doit être relue en regard des figures annexées sur lesquelles :
- la Figure 1 est une représentation schématique en perspective d'un capteur conforme à un mode de réalisation de l'invention ;
- la Figure 2 est une représentation schématique en perspective d'un détail du capteur de la Figure 1 ;
- la Figure 3 est une représentation schématique en coupe du capteur des Figures 1 et 2 ;
- les Figures 4.a et 4.b sont des représentations schématiques de détails issus de la représentation de la Figure 3 ;
- la Figure 5 est une représentation schématique du capteur des figures précédentes et des moyens de connexion qui lui sont associés.
- la Figure 6 illustre différentes étapes de la fabrication du capteur des figures précédentes.

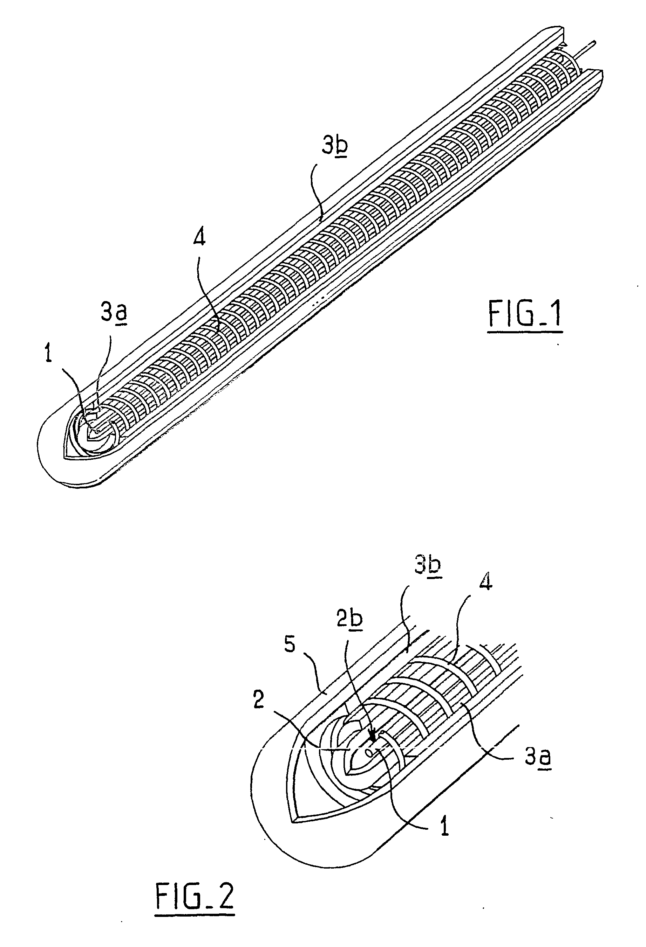

Le capteur représenté sur les Figures 1 à 5 comporte une âme cylindrique 1 qui s'étend à l'intérieur d'une gaine tubulaire 2 appelée gaine "interne" dans la suite du texte. Cette âme 1 et cette gaine interne 2 sont toutes deux en un matériau conducteur. Elles sont isolées l'une de l'autre par une poudre 2b semi-conductrice interposée entre ladite âme 1 et ladite gaine 2.

La gaine interne 2 est elle-même recouverte par une gaine isolante 3.a, sur laquelle est bobiné un fil conducteur 4.

Ce fil conducteur 4 est séparé d'une gaine externe 6, également en un matériau conducteur, par une deuxième gaine isolante 3.b qui est interposée entre ledit fil bobiné 4 et ladite gaine externe 6.

A l'extrémité du capteur, l'isolement entre les différentes gaines est assuré par une poudre isolante.

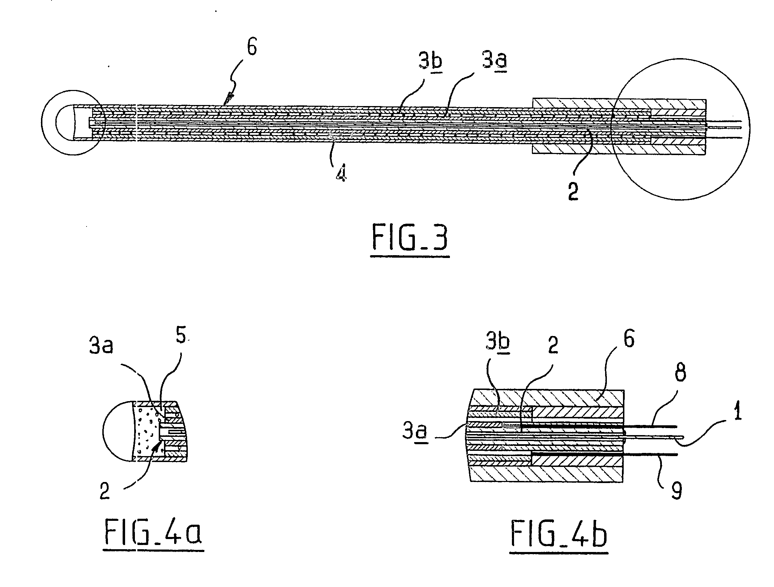

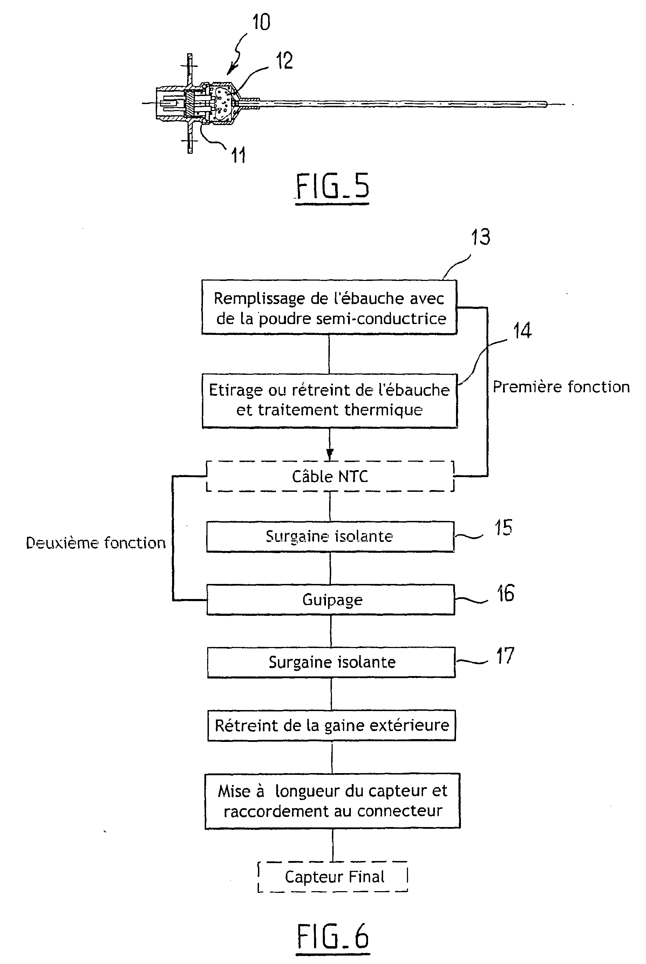

A l'autre extrémité du capteur, celui-ci comporte des moyens de connectique 10 (Figure 4.b et Figure 5) qui permettent de raccorder électriquement l'âme 1, la gaine interne 2 et le fil bobiné 4 à des circuits de traitement externes.

Ces moyens de connectique 10 comportent notamment une électrode 8 en contact avec la gaine interne 2, une électrode 9b en contact avec l'âme 1, une électrode 9 en contact avec le fil bobiné 3 et un boîtier de connecteurs sur lequel les électrodes 8, 9b et 9 sont brasées.

L'ensemble du boîtier 11 est rempli d'un ciment haute température 12 garantissant l'isolement électrique de l'ensemble par rapport à la masse, ainsi que le maintien mécanique des connexions.

Avec une telle structure, on dispose d'un câble sur lequel il est possible de mesureur la tension entre une extrémité de l'âme 1 et une extrémité de la gaine interne 2, la tension entre cette même extrémité de l'âme 1 et une extrémité du fil bobiné 4, ainsi que la tension ces mêmes extrémités du fil 4 bobiné et de la gaine interne 2.

Un tel câble intègre deux fonctions.

La première lui permet de fournir une information de zone chaude ponctuelle.

Cette information est notamment obtenue grâce à la structure que constitue l'âme 1, la gaine interne 2 et la poudre semi-conductrice 2b dans laquelle l'âme 1 est enrobée.

Dans un mode préférentiel, la poudre 2b utilisée est avantageusement avec une résistance thermo-sensible à coefficient de température négatif, de sorte que la résistance mesurée entre l'âme et la gaine interne diminue selon une loi connue (R = f(T)).

La loi de variation de la résistance de ce type de matériau étant généralement de type exponentielle, un chauffage du capteur, même en une zone très localisée, fait baisser de façon importante la résistance du matériau et est donc facilement détectable.

En variante, bien entendu, la poudre pourrait être du type à coefficient de température positif.

L'âme 1 et la gaine interne 2 sont avantageusement l'une et l'autre en nickel.

A titre d'exemple, l'âme centrale 1 a un diamètre compris entre 0,15 et 0,3 mm, tandis que la gaine 2 a un diamètre compris entre 0,8 et 1,4 mm et une épaisseur comprise entre 0,15 et 0,4 mm.

Selon la température maximum de consigne à détecter, différents types de poudre semi-conductrice peuvent être utilisés.

Notamment, pour les basses températures (jusqu'à 650° C), on utilise avantageusement des poudres de MnO, qui présentent de bonne propriétés électriques jusqu'à 650° C. Cette poudre a en outre une résistance électrique décroissant avec une température croissante et permet des variations de résistance importantes.

Pour des températures plus élevées, on utilise avantageusement un mélange de poudres de MnO et alumine. Un tel mélange permet en effet une bonne dynamique de résistance dans la plage de températures ambiantes jusqu'au-dessus de 650 C.

La deuxième fonction que permet le capteur est celle d'une détection d'une surchauffe générale de la zone dans laquelle ledit capteur est implanté. Cette fonction est obtenue grâce au bobinage 4 qui réalise une sonde thermo-résistive.

Le fil qui réalise le bobinage 4 est par exemple un fil de nickel (matériau à coefficient de température positif).

La résistance électrique mesurée est alors celle entre ledit fil bobiné 4 et la gaine interne 2.

A titre d'exemple, le fil nickel d'un diamètre de 0,15 à 0,30 mm est bobiné avec un pas constant (exemple : 700 mm linéaires pour 200 mm de capteur fini).

Plus précisément, la réalisation du câble s'effectue de la façon suivante.

Dans un premier temps, on remplit de poudre semi-conductrice une ébauche constituée de l'âme interne 1 s'étendant dans un tube destiné à constituer la gaine 2 (étape 12).

L'ensemble est étiré ou rétreint pour offrir un compactage homogène et, le cas échéant, traité thermiquement (étape 14). On dispose ainsi d'un câble NTC.

On assemble sur ce câble une tresse de céramique isolante (gaine isolante 3) (étape 15). Puis on bobine sur cette gaine isolante 3 le fil de nickel, avec un pas constant (opération de guipage 16).

Une surgaine isolante est ensuite déposée sur ce fil 4 (étape 17). L'assemblage est fait par tressage de brins de taille supérieure à ceux utilisés pour la gaine isolante 3.

L'ensemble est ensuite assemblé dans un tube de nickel (gaine externe 6), puis étiré ou rétreint (étape 18) afin de constituer un ensemble compact et robuste (étape 14).

Le capteur est ensuite mis à la longueur souhaitée et raccordé à son connecteur (étape 19).

A cet effet, il est bouché par des scellements de verre lui conférant une herméticité vis-à-vis de l'extérieur, puis brasé au boîtier et raccordé.

Le capteur qui vient d'être décrit a l'avantage de pouvoir être installé dans des zones avec de fortes contraintes thermiques, vibratoires, de pression, de pollution, d'humidité, électromécaniques. Le module électrique qui lui est associé supporte les mêmes conditions environnementales.

On notera que ce capteur a l'avantage d'être d'une structure mécanique qui lui confère une très grande souplesse. En outre, étant donné que les fonctions qu'il réalisme sont des fonctions électriques (et non pneumatiques, hydrauliques), le capteur est d'une grande fiabilité et peut être fabriqué sous forme d'un câble en grande longueur sans risque de perte d'information.

## Revendications

1. Capteur de détection de surchauffe comportant une âme (1) conductrice s'étendant à l'intérieur d'une première gaine (2) également conductrice, ladite âme (1) et ladite première gaine (2) étant séparées par un matériau ayant une résistance à coefficient de température positif ou négatif, ledit capteur comportant en outre un fil (4) en un matériau ayant une résistance à coefficient de température positif ou négatif, l'âme centrale (1), la première gaine (2) et le fil (4) étant raccordés à des moyens de connexion (10), les moyens de connexion (10) permettant de raccorder électriquement l'âme (1), la première gaine (2) et le fil (4) à des circuits de traitement, **caractérisé en ce que** le fil (4) est bobiné le long de la première gaine (2) et est séparé de celle-ci par un matériau isolant (3a).

2. Capteur selon la revendication 1, **caractérisé en ce que** le matériau qui sépare l'âme (1) et la première gaine (2) est un matériau ayant une résistance à coefficient de température négatif, le fil (4) étant en un matériau ayant une résistance à coefficient de température positif.

3. Capteur selon l'une des revendications 1 à 2, **caractérisé en ce que** l'âme (1), la première gaine (2) et le fil (4) sont en nickel.

4. Capteur selon l'une des revendications précédentes, **caractérisé en ce que** le matériau séparant la première gaine (2) et l'âme (1) est une poudre de MnO.

5. Capteur selon l'une des revendications précédentes, **caractérisé en ce que** le matériau séparant l'âme (1) de la première gaine (2) est une poudre qui est un mélange de MnO et d'alumine (AL₂O₃).

6. Capteur selon l'une des revendications précédentes, **caractérisé en ce que** le matériau isolant (3a) interposé entre le fil bobiné (4) et la première gaine (2) est constitué par une tresse de céramique assemblée sur celle-ci.

7. Capteur selon l'une des revendications précédentes, **caractérisé en ce que** la structure constituée par l'âme (1), la première gaine (2) et le fil bobiné (4) est disposée dans un tube (6) étiré ou rétreint.

8. Capteur selon l'une la revendication 6, **caractérisé en ce que** ledit tube (6) est un tube de nickel.

9. Capteur selon la revendication 8, **caractérisé en ce que** ledit tube (6) de nickel est séparé du bobinage par une tresse (3b) de céramique isolante.

10. Capteur selon l'une des revendications précédentes, **caractérisé en ce qu'**il comporte à une de ses extrémités un boîtier de connexion rempli d'un ciment haute température (12).

## Claims

1. An overheat detection sensor including a conducting core (1) extending inside a first also conducting sheath (2), said core (1) and said first sheath (2) being separated by a material having a resistance with a positive or negative temperature coefficient, said sensor further including a wire (4) made of a material having a resistance with a positive or negative temperature coefficient, the central core (1), the first sheath (2) and the wire (4) being connected to connection means (10), the connection means (10) allowing the core (1), the first sheath (2) and the wire (4) to be electrically connected to processing circuits, **characterized in that** the wire (4) is wound along the first sheath (2) and is separated from the latter by an insulating material (3a).

2. The sensor of claim 1, **characterized in that** the material which separates the core (1) and the first sheath (2) is a material having a resistance with a negative temperature coefficient, the wire (4) being made of a material having a resistance with a positive temperature coefficient.

3. The sensor of any of claims 1 to 2, **characterized in that** the core (1), the first sheath (2) and the wire (4) are made of nickel.

4. The sensor of any of the preceding claims, **characterized in that** the material separating the first sheath (2) and the core (1) is a MnO powder.

5. The sensor of any of the preceding claims, **characterized in that** the material separating the core (1) from the first sheath (2) is a powder which is a mixture of MnO and alumina (Al₂O₃) -

6. The sensor of any of the preceding claims, **characterized in that** the insulating material (3a) interposed between the wound wire (4) and the first sheath (2) is formed by a ceramic braid assembled on the latter.

7. The sensor of any of the preceding claims, **characterized in that** the structure formed by the core (1), the first sheath (2) and the wound wire (4) is positioned in a stretched tube or a tube (6) sinking.

8. The sensor of claim 6, **characterized in that** said tube (6) is a nickel tube.

9. The sensor of claim 8, **characterized in that** said nickel tube (6) is separated from the winding by an insulating ceramic braid (3b).

10. The sensor of any of the preceding claims, **characterized in that** it includes at one of its ends, a connection box filled with high temperature cement (12).

## Patentansprüche

1. Sensor zur Erkennung von Überhitzung, einen leitenden Kern (1) umfassend, der sich in einem ersten, ebenfalls leitenden Mantel (2) erstreckt, wobei besagter Kern (1) und besagter erster Mantel (2) durch ein Material getrennt sind, das einen Widerstand mit positivem oder negativem Temperaturkoeffizienten aufweist, wobei besagter Sensor weiterhin einen Draht (4) aus einem Material umfasst, das einen Widerstand mit positivem oder negativem Temperaturkoeffizienten aufweist, wobei der zentrale Kern (1), der erste Mantel (2) und der Draht (4) mit Verbindungsmitteln (10) verbunden sind, wobei es die Verbindungsmittel (10) ermöglichen, den Kern (1), den ersten Mantel (2) und den Draht (4) mit Verarbeitungskreisen elektrisch zu verbinden, **dadurch gekennzeichnet, dass** der Draht (4) entlang des ersten Mantels (2) gewickelt ist und von diesem durch ein Isoliermaterial (3a) getrennt ist.

2. Sensor nach Anspruch 1, **dadurch gekennzeichnet, dass** das Material, das den Kern (1) und den ersten Mantel (2) trennt, ein Material mit einem Widerstand mit einem negativen Temperaturkoeffizienten ist, wobei der Draht (4) aus einem Material besteht, welches einen Widerstand mit einem positiven Temperaturkoeffizienten aufweist.

3. Sensor nach einem der Ansprüche 1 bis 2, **dadurch gekennzeichnet, dass** der Kern (1), der erste Mantel (2) und der Draht (4) aus Nickel bestehen.

4. Sensor nach einem der vorangehenden Ansprüche, **dadurch gekennzeichnet, dass** das den ersten Mantel (2) und den Kern (1) trennende Material ein MnO-Pulver ist.

5. Sensor nach einem der vorangehenden Ansprüche, **dadurch gekennzeichnet, dass** das den Kern (1) vom ersten Mantel (2) trennende Material ein Pulver ist, das ein Gemisch aus MnO und Aluminiumoxid (Al₂O₃) darstellt.

6. Sensor nach einem der vorangehenden Ansprüche, **dadurch gekennzeichnet, dass** das Isoliermaterial (3a) zwischen dem gewickelten Draht (4) und dem ersten Mantel (2) von einer Keramikbeflechtung gebildet wird, die auf dem Mantel angebracht ist.

7. Sensor nach einem der vorangehenden Ansprüche, **dadurch gekennzeichnet, dass** die von dem Kern (1), dem ersten Mantel (2) und dem gewickelten Draht (4) gebildete Struktur in einem erweiterten oder querschnittsverminderten Rohr angeordnet ist.

8. Sensor nach Anspruch 6, **dadurch gekennzeichnet, dass** besagtes Rohr (6) ein Nickelrohr ist.

9. Sensor nach Anspruch 8, **dadurch gekennzeichnet, dass** besagtes Nickelrohr (6) von der Wickelung durch eine isolierende Keramikbeflechtung (3b) getrennt ist.

10. Sensor nach einem der vorangehenden Ansprüche, **dadurch gekennzeichnet, dass** er an einem seiner Enden ein Anschlussgehäuse umfasst, das mit einem Hochtemperaturzement (12) gefüllt ist.
